Europäisches Patentamt

European Patent Office

Office européen des brevets

(19)

(11) Numéro de publication: **0 140 773**
**B1**

(12)                 FASCICULE DE BREVET EUROPÉEN

(45) Date de publication du fascicule du brevet:
**17.01.90**

(51) Int. Cl.⁴: **F 16 L 11/11, F 16 L 11/12**

(21) Numéro de dépôt: **84402023.0**

(22) Date de dépôt: **09.10.84**

(54) **Tube flexible utilisable notamment pour le transport de fluides caloporteurs ou frigorifiques.**

(30) Priorité: **20.10.83 FR 8316716**

(43) Date de publication de la demande:
**08.05.85 Bulletin 85/19**

(45) Mention de la délivrance du brevet:
**17.01.90 Bulletin 90/03**

(84) Etats contractants désignés:
**BE CH DE GB IT LI NL SE**

(56) Documents cité:
**EP-A-0 050 469**
**FR-A-1 333 402**
**FR-A-1 550 050**
**GB-A-1 414 113**

(73) Titulaire: **INSTITUT FRANCAIS DU PETROLE**
**4, Avenue de Bois-Préau**
**F-92502 Ruell-Malmaison (FR)**

(72) Inventeur: **Huvey, Michel**
**2, avenue des Pinsons**
**F-78380 Bougival (FR)**

(74) Mandataire: **Aubel, Pierre**
**Institut Franfais du Pétrole Département Brevets 4,**
**avenue de Bois Préau**
**F-92502 Ruell-Malmaison (FR)**

LIBERGRAF, STOCKHOLM 1990

## Description

La présente invention concerne une nouvelle structure de tube flexible dont les parois peuvent supporter de fortes pressions sans subir d'écrasement excessif.

L'un des objets de l'invention est de réaliser des tubes flexibles isolés thermiquement et permettant de supporter de fortes pressions différentielles, quel que soit le sens d'où elles proviennent.

Un autre objet de la présente invention est de réaliser des tubes utilisables notamment pour le transport des fluides caloporteurs tels de l'eau, en particulier pour le chauffage urbain, ou encore des fluides frigorifiques. Les tubes selon l'art antérieur réalisés en vue d'un tel usage sont généralement rigides, d'où des montages complexes et coûteux pour contourner les obstacles et pour tenir compte de la dilatation thermique de ces tubes. De plus, les matériaux généralement utilisés pour l'isolation thermique n'ont une bonne résistance à la compression que si leur densité est élevée, et ce sont alors de médiocres isolants. S'ils sont utilisés avec une faible densité, leur résistance à la compression est faible et de ce fait lorsqu'on utilise ces tubes en les soumettant à des pressions externes importantes, par exemple en les enterrant dans le sol, on constate un écrasement important du matériau d'isolation thermique. Cet écrasement s'accompagne d'une dégradation des qualités d'isolation thermique de ce matériau.

Le tube selon la présente invention évite une grande partie de ces écueils.

L'art antérieur peut être illustré par les brevets ou demandes de brevets français FR-A-1 550 000, FR-A-1 333 402 et FR-A-2 337 298, les brevets britanniques GB-A-591 307 et GB-A-1 414 113, ainsi que par la demande de brevet européen EP-A-0 050 469. Le brevet FR-A-1 550 000 décrit un tube ondulé dont les ondulations sont remplies d'une matière flexible ou d'un élastomère adhérant à la matière de base du tube.

Selon notre invention, on utilise au moins un élément de renfort qui épouse étroitement la forme des ondes et qui n'est pas adhérent à la matière de base du tube. Par ailleurs, selon notre invention, cet élément est rigide transversalement et comporte des moyens de résistance à la traction longitudinale, tels qu'une tresse.

Le brevet français FR-A-1 333 402 décrit un tube ondulé qui ne comporte pas une telle tresse, ni de structure alvéolaire.

La demande de brevet français FR-A-2 337 298 décrit un tube rigide à grande isolation. Un fluide à température intermédiaire circule à contre courant du fluide principal en position centrale.

Ce produit peut difficilement être comparé à notre canalisation, non plus que les séparations longitudinales assurant une bonne circulation des gaz dans le premier annulaire ne peuvent être comparées à la structure alvéolaire que peut comporter un tube selon l'invention.

Le brevet britannique GB-A-591 307 décrit un flexible armé constitué d'une gaine imperméable et de tissus coincés entre deux spirales métalliques de même pas, l'une intérieure et l'autre extérieure. Selon ce document antérieur, le rayon de tore reste grand et, par suite, la résistance de la couche de tissus doit être élevée pour que ce tube résiste à des pressions fortes. Le produit ainsi obtenu sera coûteux, peu flexible et pas très résistant.

Le brevet britannique GB-A-1 414 113 décrit un tube comportant un isolant entre deux couches de tissus.

Enfin, le brevet européen EP-A-0 050 469 décrit une forme particulière des éléments de renfort. Le dispositif décrit dans ce brevet antérieur ne comporte pas de structure alvéolaire ni d'élément de renfort épousant la forme du creux de l'ondulation.

Le tube flexible selon l'invention comporte une gaine interne dont la surface extérieure présente des ondulations, cette gaine pouvant comporter éventuellement un ou plusieurs éléments de renfort interne. L'intersection de ladite gaine avec un plan longitudinal pénétrant à l'intérieur de ladite gaine définit des ondulations de hauteur ou amplitude H, cette hauteur étant mesurée en considérant l'ondulation sur la face externe de ladite gaine. Le tube selon l'invention comporte en plus au moins un élément de renfort externe, ayant une surface interne qui épouse la forme du creux d'une ondulation qu'il remplit sur une hauteur (h), inférieure à l'amplitude (H) de l'ondulation sans pour autant adhérer à ladite gaine, ainsi que des moyens de résistance à la traction longitudinale de préférence une tresse externe de renfort, ces moyens de renfort entourant ladite gaine interne équipée de l'élément de renfort externe, lesdits moyens permettant de limiter l'allongement de la gaine interne notamment lors de la mise en pression de l'intérieur de la dite gaine.

L'élément de renfort externe est rigide transversalement.

Le tube flexible selon l'invention comporte également une structure alvéolaire recouvrant soit l'élément de renfort externe, soit la tresse. Cette structure alvéolaire étant souple dans le sens longitudinal du tube et rigide dans le sens radial.

La face externe de l'élément de renfort externe peut avoir une forme qui s'inscrit sensiblement, du moins en partie dans un cylindre.

La structure alvéolaire pourra être avantageusement remplie d'un matériau ayant des propriétés d'isolation thermique.

Enfin, le tube flexible selon la présente invention pourra être recouvert d'une gaine extérieure.

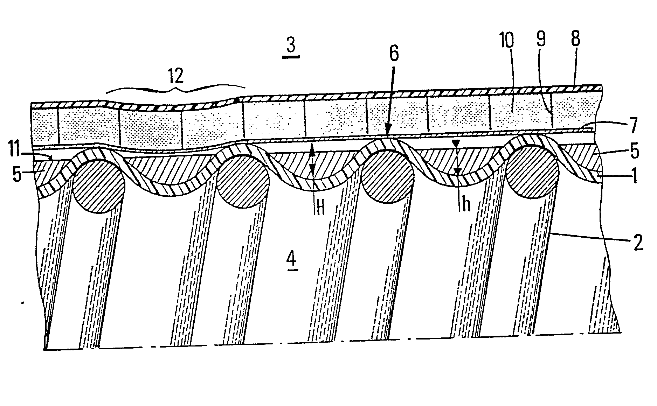

La présente invention pourra être mieux comprise et ses avantages apparaitront plus clairement à la description qui suit d'exemples particuliers de réalisation illustrés par la figure ci-jointe qui illustre une vue en coupe d'un tube selon l'invention, ce tube comportant une structure alvéolaire.

La référence 1 sur la figure désigne la gaine interne ondulée du tube flexible.

Dans l'ensemble illustré, la gaine interne ondulée comporte des moyens de renfort interne 2 qui peuvent être constitués d'anneaux ou d'un élément hélicoïdal.

Ces moyens de renfort interne permettent à la gaine de supporter les efforts de compression radiale résultant de ce que la pression régnant en 3 à l'extérieur du tube est supérieure à la pression régnant en 4 à l'intérieur du tube.

L'intersection du tube avec un plan longitudinal pénétrant à l'intérieur de ladite gaine définit des ondulations.

Selon la présente invention, on renforce la gaine interne ondulée en plaçant un élément de renfort externe 5 sur la gaine ondulée. Cet élément 5 se loge dans le creux des ondulations de la gaine. Il épouse la forme de l'ondulation dont il remplit le creux sur une hauteur h inférieure à la hauteur H de l'ondulation elle même. Ainsi des zones de la gaine interne référencées 6 ne sont pas en contact avec l'élément de renfort 5. Ce sont notamment ces zones qui permettent la flexibilité du tube.

L'élément de renfort externe 5 pourra comporter des matériaux fibreux, par exemple de fibres de verre.

De même, cet élément pourra comporter plusieurs anneaux ou une ou plusieurs hélices, ceci dépendant bien entendu de la structure de la gaine ondulée. L'élément de renfort externe comporte une face externe qui, au moins en partie, s'inscrit sensiblement dans un cylindre. Bien entendu les éléments de renfort interne 2 peuvent être supprimés, notamment dans le cas où la pression interne en 4 est toujours supérieure à la pression externe en 3.

Afin de renforcer dans le sens longitudinal le tube décrit précédemment, on l'équipe de moyens de résistance à la traction longitudinale tels, par exemple, une tresse représentée schématiquement sur la figure et désignée par la référence 7.

Pour réduire les échanges thermiques entre le milieu extérieur 3 et le milieu 4 à l'intérieur du tube, une structure alvéolaire 9 est placée extérieurement autour de la gaine interne 1 équipée de l'élément de renfort externe 5 et de la tresse 7.

Cette structure alvéolaire est rigide dans une direction radiale grâce à des cloisons ayant une direction sensiblement perpendiculaire à l'axe du tube. Elle peut être recouverte d'une gaine externe protectrice 8.

Les alvéoles pourront être avantageusement remplies d'un matériau 10 ayant des propriétés d'isolation thermique.

Lorsqu'un tel tube comporte la structure alvéolaire 9 garnie de matériau d'isolation 10, c'est la structure alvéolaire qui transmet les efforts à l'écrasement et non le matériau d'isolation comme cela est désigné par la référence 12 sur la figure.

De ce fait, il devient possible à un tel tube de supporter des valeurs importantes de la pression à l'écrasement des parois sans provoquer l'écra-sement du matériau d'isolation, même si celui-ci a une très faible résistance à la compression.

Il convient de rappeler ici que l'écrasement d'un matériau d'isolation thermique s'accompagne généralement d'une diminution des qualités thermiques isolantes.

Cet inconvénient est supprimé avec la structure indiquée ci-dessus.

Un tel tube peut être utilisé pour le transport de fluides caloporteurs, par exemple pour le chauffage urbain, pour le transport de fluides frigorifiques, ou de refroidissement, ou d'une manière plus générale pour le transport de fluides dont on souhaite limiter les échanges thermiques pendant cette phase de transport, par exemple pour le transport de pétrole lourd ou de gaz naturel liquéfié.

**Revendications**

1. Tube flexible comportant une gaine interne dont la surface extérieure présente des ondulations, au moins un élément de renfort externe (5), n'adhérant pas à ladite gaine, ainsi que des moyens (7) de résistance à la traction longitudinale, ces moyens entourant l'élément de renfort externe, caractérisé en ce que l'élément de renfort externe a une surface interne qui épouse la forme du creux d'une ondulation qu'il remplit sur une hauteur (h) inférieure à l'amplitude (H) de l'ondulation et que le tube comporte une structure alvéolaire (9) recouvrant l'élément de renfort externe (5).

2. Tube flexible selon la revendication 1 caractérisé en ce que ladite structure alvéolaire (9) comporte des cloisons ayant une direction sensiblement perpendiculaire à l'axe du tube.

3. Tube flexible selon l'une des revendications 1 ou 2, caractérisé en ce que ladite structure alvéolaire (9) est remplie d'un matériau ayant des propriétés d'isolation thermique.

4. Tube flexible selon l'une des revendications 1 à 3, caractérisé en ce que ladite structure alvéolaire (9) est recouverte d'une gaine extérieure (8).

5. Tube flexible selon l'une des revendications 1 à 4, caractérisé en ce que les moyens de résistance à la traction longitudinale comportent une tresse (7).

**Patentansprüche**

1. Flexibles Rohr bzw. flexibler Schlauch mit einer Innenhülle, deren Außenfläche Wellungen aufweist, mit wenigstens einem äußeren Verstärkungselement (5), das nicht an dieser Hülle haftet sowie Einrichtungen (7) mit Zugbeständigkeit in Längsrichtung, wobei diese Einrichtungen das äußere Verstärkungselement umschließen, dadurch gekennzeichnet, daß das äußere Verstärkungselement eine Innenfläche hat, die die Form des Wellentals einer Wellung einnimmt, das sie über eine Höhe (h) kleiner als die Amplitude der Wellung (H) füllt und daß das Rohr eine Zellstruktur (9) umfaßt, die das äußere Verstärkungselement (5) überdeckt.

2. Flexibles Rohr nach Anspruch 1, dadurch gekennzeichnet, daß die Zellstruktur (9) Trennwandungen mit einer Richtung im wesentlichen senkrecht zur Achse des Rohres umfaßt.

3. Flexibles Rohr nach einem der Ansprüche 1 oder 2, dadurch gekennzeichnet, daß diese Zellstruktur (9) von einem Material mit Wärmeisolierungseigenschaften gefüllt ist.

4. Flexibles Rohr nach Anspruch 1 bis 3, dadurch gekennzeichnet, daß diese Zellstruktur (9) von einer Außenhülle (8) überdeckt ist.

5. Flexibles Rohr nach einem der Ansprüche 1 bis 4, dadurch gekennzeichnet, daß die Einrichtungen mit Zugbeständigkeit in Längsrichtung eine Umflechtung (7) umfassen.

**Claims**

1. Flexible tube comprising an internal sheath, the external surface presenting corrugations, at least one external reinforcing element (5) which does not adhere to the said sheath, together with a means (7) of resistance to the longitudinal tensile force, this means surrounding the external reinforcing element, characterised in that the external reinforcing element has an internal surface which takes up the shape of the hollow forming the corrugation which it fills over a height (h) less than the amplitude (H) of the corrugation and in that the tube includes a cellular structure (9) which covers the external reinforcing element (5).

2. Flexible tube in accordance with claim 1, characterised in that the said cellular structure (9) includes separators or divisions which are basically arranged perpendicular to the axis of the tube.

3. Flexible tube in accordance with one of claims 1 or 2, characterised in that the said cellular structure (9) is filled with a material which has thermal insulating properties.

4. Flexible tube in accordance with one of claims 1 to 3, characterised in that the said cellular structure (9) is covered with an external sheath (8).

5. Flexible tube in accordance with one of claims 1 to 4, characterised in that the means of resistance to the longitudinal tensile force comprises a braid (7).